# EUROPÄISCHE PATENTSCHRIFT

(11) **EP 1 544 229 B1**
(45) Veröffentlichungstag und Bekanntmachung des Hinweises auf die Patenterteilung: **24.11.2010**
(21) Anmeldenummer: 04028823.5
(22) Anmeldetag: 06.12.2004
(51) Int. Cl.: C08G 18/66, C08J 9/00, C08K 3/36

(54) **Verfahren zur Herstellung von Polyurethanintegralschaumstoffen**
Process for the preparation of polyurethane integral foams
Procédé pour la préparation de mousses intégrales de polyuréthane

(30) Priorität: 17.12.2003 DE 10359075
(43) Veröffentlichungstag der Anmeldung: 22.06.2005
(73) Patentinhaber: Bayer MaterialScience AG, 51368 Leverkusen (DE)
(72) Erfinder: Eisen, Norbert Dr., 50999 Köln (DE); Arntz, Hans-Detlef Dr., 53797 Lohmar (DE); Liebegott, Lutz, 51379 Leverkusen (DE)

(56) Entgegenhaltungen:
- EP-A- 0 723 989
- US-A- 4 518 718
- US-A- 5 110 834

## Beschreibung

Die Erfindung betrifft ein Verfahren zur Herstellung von Polyurethanformkörpem mit verdichteter Randzone und einem zelligen Kern, sogenannten Integralschaumstoffen unter Verwendung von anorganischen Zeolithen.

Zur Herstellung von Polyurethanformteilen mit einer verdichteten Randzone und einer zelligen Innenstruktur wurde bis zur Kenntnis des ozonschädigenden Verhaltens nahezu ausschließlich Monofluortrichlormethan (R11) als Treibmittel verwendet. Einhergehend mit diesen Befunden wurde eine Vielzahl anderer Fluor enthaltender Treibgase vom Typ der Hydrogenfluorkohlenwasserstoffe (HFKW) und Fluorkohlenwasserstoffe (FKW) entwickelt und untersucht. In diese Untersuchungen wurden auch Kohlenwasserstoffe einbezogen, wie aus der Literatur hervorgeht (DE-A 3 430 285, US-A 3 178 490, US-A 3 182 104, US-A 4 065 410, DE-A 2 622 957, US-A 3 931 106 und DE-A 2 544 560).

Typische Vertreter der HFKW sind R365mfc (1,1,1,3,3-Pentafluorbutan) und R245fa (1,1,1,3,3-Pentafluorpropan) und der Kohlenwasserstoffe sind n-Pentan, iso-Pentan, Cyclopentan und iso-Hexan. Des weiteren können auch Ketone (z.B. Aceton) oder Ether als Treibmittel verwendet werden. Die genannten Treibmittel sind geeignet, Integralschaumstoffe mit einer ausgeprägten Randzone zu erzeugen. Mischungen aus den besagten Treibmitteln und Polyolformulierungen oder Isocyanaten, die üblicherweise für die Weiterverarbeitung zum Formkörper angefertigt werden, haben jedoch in der Regel Flammpunkte bei sehr niedrigen Temperaturen, so dass für die Verarbeitungsmaschinen ein sogenannter Ex-Schutz (Explosionsschutz) erforderlich ist.

In DE-A 1 804 362 werden Alkali-Aluminium-Silikate zusätzlich zu Fluorchlorkohlenwasserstoffen eingesetzt, um PUR-Schaumstoffe herzustellen, die weniger anfällig gegenüber Schrumpfung sind.

In EP-A 723 989 werden Polyurethan-Isolierschaumstoffe mit einer Rohdichte von 37 - 48 kg/m³ beschrieben, die unter Verwendung von physikalischen Treibmitteln, insbesondere Cyclopentan hergestellt werden. Zum Abfangen von Kohlendioxid werden Epoxide und CO₂-Fixierungskatalysatoren eingesetzt.

In US-A 4518718 werden Polyurethan-Hartschäume für Trocknungsanwendungen offenbart, die bis zu 60 Gew.-% Zeolithe enthalten. Die Zeolithe werden über die sogenannte Polyol- und Isocyanatkomponente zugegeben. Als Treibmittel werden halogenierte Kohlenwasserstoffe eingesetzt.

US-A 5110834 beschreibt Polyurethan-Intergralschäume, die mit physikalischen Treibmitteln geschäumt werden. Zeolithe werden der Polyolkomponente zugegeben.

EP-A 319 866 beschreibt ein Verfahren zur Herstellung von Polyurethanformteilen mit einer Rohdichte von mindestens 300 kg/m³, bei dem zeolithische Adsorbentien unter Verwendung von Wasser und/oder Kohlendioxid eingesetzt werden. Die Zeolithe werden der Polyolformulierung beigefügt.

Aufgabe der Erfindung war es, ein Verfahren zur Herstellung von weichen bis harten Polyurethanformkörpern mit verdichteter Randzone und zelligem Kern ohne Verwendung von physikalischen Treibmitteln zur Verfügung zu stellen, das es gestattet, ohne Explosionsschutzmaßnahmen auszukommen.

Überraschenderweise wurde gefunden, dass durch Verwendung von anorganischen Zeolithen in der Isocyantkomponente die Integralstruktur der Formteile, der Schäumprozess und die Qualität der Formteile im Vergleich zu EP-A 319 866 stark verbessert werden konnte.

Gegenstand der vorliegenden Erfindung ist ein Verfahren zur Herstellung von Polyurethanintegralschaurnstoffen mit Rohdichten von 180 bis 400 kg/m³ ohne Verwendung von physikalischen Treibmitteln, das dadurch gekennzeichnet ist, dass man eine Polyolformulierung (A) bestehend aus
a) mindestens einer Polyolkomponente mit einer OH-Zahl von 20 bis 1050, vorzugsweise 200 bis 900, und einer Funktionalität von 2 bis 6, bevorzugt 2 bis 5, oder einer Mischung aus Polyolkomponenten mit einer rechnerisch gemittelten OH-Zahl von 250 bis 650, bevorzugt 350 bis 500, und einer rechnerisch gemittelten Funktionalität von 2,5 bis 5, bevorzugt 3 bis 4,5,
b) gegebenenfalls Kettenverlängerungs- und/oder Vernetzungsmitteln,
c) gegebenenfalls Aktivatoren,
d) 0,5 - 5 Gew.%, bezogen auf (A), Wasser als Treibmittel, und
e) gegebenenfalls an sich bekannten Zusatzstoffen und Hilfsmitteln
mit einer Isocyanatkomponente (B) bestehend aus
f) organischen und/oder modifizierten organischen Polyisocyanaten und/oder Polyisocyanatprepolymeren und
g) 2 - 10 Gew.-%, bezogen auf (B) anorganischen Zeolithen
umsetzt.

Die nach dem erfindungsgemäßen Verfahren hergestellten Formteile haben gegenüber dem Stand der Technik eine höhere Oberflächenhärte, die auf eine verbesserte Integralstruktur hinweist, sowie eine günstigere Rohdichteverteilung, die durch ein besseres Fliessverhalten im Werkzeug erzielt wird.

Als Polyisocyanat f) kommen beliebige aromatische Polyisocyanate mit einem NCO-Gehalt von mindestens 20 Gew.-% in Betracht. Ganz besonders bevorzugt werden die bekannten Polyisocyanatgemische der Diphenylmethanreihe verwendet, wie sie beispielsweise durch Phosgenierung von Anilin/Formaldehyd-Kondensaten zugänglich sind. Diese für das erfindungsgemäße Verfahren besonders gut geeigneten Polyisocyanatgemische weisen im Allgemeinen einen Gehalt an Diiso cyanatodiphenylmethan-Isomeren von 50 bis 100 Gew.-% auf und bestehen im wesentlichen zum Rest aus höherfunktionellen Homologen dieser Diisocyanate. Die in diesen Gemischen vorliegenden Diisocyanate bestehen im wesentlichen aus 4,4'-Diisocyanatodiphenylmethan in Abmischung mit bis zu 60 Gew.-%, bezogen auf die Gesamtmenge der Diisocyanate an 2,4'-Diisocyanatodiphenylmethan und gegebenenfalls geringen Mengen an 2,2'-Diisocyanatodiphenylmethan. Auch Urethan-, Carbodiimid- oder Allophanat-modifizierte Derivate dieser Polyisocyanate können als Polyisocyanat f) eingesetzt werden.

Bei der Polyhydroxykomponente a) handelt es sich um mindestens eine organische Polyhydroxylverbindung, vorzugsweise um ein Gemisch mehrerer organischer Polyhydroxylverbindungen, wobei dieses Gemisch eine (mittlere) Hydroxylfunktionalität von 2,5 bis 5, vorzugsweise von 3,0 bis 4,5 und eine (mittlere) Hydroxylzahl von 250 bis 650 mg KOH/g, vorzugsweise von 350 bis 500 mg KOH/g aufweist. Bei den einzelnen Bestandteilen der Polyhydroxylkomponente a) handelt es sich insbesondere um an sich bekannte Polyetherpolyole, wie sie durch Alkoxylierung von geeigneten Startermolekülen erhalten werden können. Geeignete Startermoleküle sind beispielsweise Wasser, Propylenglykol, Ethylenglykol, Glycerin, Trimethylolpropan, Rohrzucker, Sorbit, Ethylendiamin bzw. Abmischungen derartiger Startermoleküle. Geeignete Alkoxylierungsmittel sind insbesondere Propylenoxid und gegebenenfalls Ethylenoxid, welches im Gemisch mit Propylenoxid oder auch separat in getrennten Reaktionsschritten während der Alkoxylierungsreaktion zur Anwendung gelangen kann.

Die Polyhydroxylkomponente a) kann außer derartigen Polyetherpolyolen auch einfache Alkanpolyole wie Ethylenglykol, Propylenglykol, Trimethylolpropan und/oder Glycerin als Abmischkomponente enthalten. Auch die üblichen Polyesterpolyole des Standes der Technik können Bestandteile der Komponente a) sein, sofern diese den o.g. Bedingungen entsprechen.

Die Polyolkomponente a) wird oftmals in mit Luft beladener Form verwendet. Üblich ist eine Luftbeladung von bis zu 35 Volumen-%, bezogen auf den atmosphärischen Druck.

Als Treibmittel wird Wasser verwendet. Die Gesamtmenge des in die Polyolformulierung (A) eingebrachten Wassers liegt bei 0,5 bis 5 Gew.-%, bevorzugt bei 1 bis 2 Gew.-%, bezogen auf das Gewicht der Polyolformulierung A).

Bei den gegebenenfalls eingesetzten Aktivatoren c) handelt es sich vor allem um die bekannten, die Isocyanat-Polyadditionsreaktion beschleunigenden tert. Amine, wie z.B. Triethylendiamin, N,N-Dimethylanilin oder N,N-Dimethylcyclohexylamin, bzw. metallorganische Verbindungen, insbesondere Zinnverbindungen, wie z.B. Zinn(II)-octoat oder Dibutylzinndilaurat. Auch Trimerisierungskatalysatoren, wie beispielsweise Alkaliacetate wie Natrium- oder Kaliumacetat, Alkaliphenolate wie Natriumphenolat oder Natriumtrichlorphenolat oder 2,4,6-Tris(dimethylaminomethyl)-phenol können erfindungsgemäß zum Einsatz gelangen.

Bei den Kettenverlängerungsmitteln/Vernetzungsmitteln handelt es sich um die üblichen bekannten Verbindungen mit OH- oder NH-Zahlen von 600 bis 1850 mg KOH/g, bevorzugt von 1050 bis 1850 mg KOH/g, und mit Funktionalitäten von 2 bis 4.

Erfindungswesentliches Hilfsmittel sind anorganische Zeolithe, d.h. Alkalialumosilikate oder Alkali-Erd-alkali-Alumosilikate. Besondere gut geeignet sind synthetische Zeolithe (vgl. Ullmanns Enzyklopädie der technischen Chemie, 4. Auflage, Band 17, Seiten 9-18, Verlag Chemie, Weinheim/New York).

Die Zeolithe werden im Allgemeinen in Form von Pulvern mit einem maximalen Teilchendurchmesser von 100 µm, vorzugsweise ≤10 µm verwendet.

Für das erfindungsgemäße Verfahren besonders gut geeignet sind synthetische Zeolithe vom Faujasit-Typ mit der allgemeinen Formel

(M', M"_{1/2)2}O • Al₂O₃ • y SiO₂ • z H₂O

in welcher
- M': für Natrium- oder Kaliumkationen stehen,
- M": für Calcium- oder Magnesiumkationen stehen,
- y: einen Wert von 2 bis 6 einnehmen kann, wobei synthetische Zeolithe vom Typ X einen y- Wert von 2 bis 3, solche vom Typ y einen y-Wert von 3 bis 6 aufweisen können und
- z: für 0 oder eine Zahl bis 5,5 (Typ X) bzw. für 0 oder eine Zahl bis 8 (Typ Y) steht.

Besonders gut geeignet ist ein Zeolith mit der Bezeichung Baylith^{®} L, wie er von UOP vertrieben wird.

Die anorganischen Zeolithe werden in Mengen von 2 bis 10 Gew.-%, besonders bevorzugt von 3 bis 5 Gew.-%, bezogen auf die Polyisocyanatkomponente (B), eingesetzt.

Beim erfindungsgemäßen Verfahren können auch weitere Hilfs- und Zusatzmittel mitverwendet werden, welche in der Regel der Polyolformulierung beigemischt werden. Hierzu gehören beispielsweise Schaumstabilisatoren, wie beispielsweise solche auf Basis von Polyethermodifizierten Polysiloxanen, Flammschutzmittel, Stabilisatoren, innere Formtrennmittel und dergleichen.

Die erfindungsgemäß hergestellten Polyurethanintegralschaumstoffe haben eine Rohdichte von 100 bis 500 kg/m³, besonders bevorzugt von 180 bis 400 kg/m³.

Zur Durchführung des erfindungsgemäßen Verfahrens wird im allgemeinen so vorgegangen, dass die Komponenten a) bis e) vorab miteinander vermischt und anschließend mit der Polyisocyanatkomponente B) vereinigt werden. Die letztgenannte Durchmischung erfolgt beispielsweise unter Verwendung von Rührwerksmischern oder vorzugsweise unter Verwendung der üblichen Hochdruck-Mischaggregate, wie sie üblicherweise zur Herstellung von Polyurethanschaumstoffen verwendet werden. Unmittelbar nach der Herstellung des Reaktionsgemischs erfolgt die Befüllung der Form. Im allgemeinen beträgt die Temperatur der zur Anwendung gelangenden Formwerkzeuge mindestens 30°C, vorzugsweise mindestens 50°C. Die Innenwände der Werkzeuge können erforderlichenfalls vor der Befüllung mit an sich bekannten äußeren Formtrennmitteln behandelt werden.

Die Erfindung soll anhand der nachfolgenden Beispiele näher erläutert werden.

### Beispiele

### Beispiel 1 (Vergleich):

### Rezeptur für PUR-Hartschaumstoff:

### Komponente A:

| | |
|---|---|
| 45,0 Gew.-Teile | Sucrose, Propylenglykol-gestarteter Polyether vom Molekulargewicht 600 g/ml (OH-Zahl: 450) auf Basis 1,2-Propylenoxid |
| | |
| 35,0 Gew.-Teile | Sucrose, Ethylenglykol-gestarteter Polyether vom Molekulargewicht 360 g/mol (OH-Zahl:440) auf Basis 1,2-Propylenoxid |
| | |
| 15,0 Gew.-Teile | Trimethylolpropan-gestarteter Polyether vom Molekulargewicht 160 g/mol (OH-Zahl:1030) auf Basis 1,2-Propylenoxid |
| | |
| 1 Gew.-Teil | Stabilisator B 8411 (Fa. Goldschmidt AG) |
| | |
| 0,6 Gew.-Teile | Aktivator Desmorapid^{®} PV (Bayer AG) |
| | |
| 1,8 Gew.-Teile | Aktivator Desmorapid^{®} DB (Bayer AG) |
| | |
| 0,21 Gew.-Teile | Aktivator Dabco 33 LV (Air Products) |
| | |
| 1,05 Gew.-Teile | Wasser |

### Komponente B:

Desmodur^{®} 44V10L (Bayer AG)

Polyisocyanatgemisch der Diphenylmethanreihe, hergestellt durch Phosgenierung eines Anilin /Formaldehyd-Kondensats; NCO-Gehalt: 31,5 Gew.-%, Viskosität (bei 25°C): 100 mPa.s.

Die Komponenten A und B wurden im Gewichtsverhältnis 100:148 mittels Rührer zur Umsetzung gebracht und in einer geschlossenen Form auf eine Rohdichte von 250 kg/m³ verdichtet. Die freie Rohdichte des Schaumstoffes betrug 100 kg/m³.

### Beispiel 2 (Vergleich):

### Rezeptur für PUR-Hartschaumstoff:

### Komponente A:

| | |
|---|---|
| 45,0 Gew.-Teile | Sucrose, Propylenglykol-gestarteter Polyether vom Molekulargewicht 600 g/ml (OH-Zahl: 450) auf Basis 1,2-Propylenoxid |
| | |
| 35,0 Gew.-Teile | Sucrose, Ethylenglykol-gestarteter Polyether vom Molekulargewicht 360 g/mol (OH-Zahl:440) auf Basis 1,2-Propylenoxid |
| | |
| 15,0 Gew.-Teile | Trimethylolpropan-gestarteter Polyether vom Molekulargewicht 160 g/mol (OH-Zahl: 1030) auf Basis 1,2-Propylenoxid |
| | |
| 1 Gew.-Teil | Stabilisator B 8411 (Fa. Goldschmidt AG) |
| | |
| 0,6 Gew.-Teile | Aktivator Desmorapid^{®} PV (Bayer AG) |
| | |
| 1,8 Gew.-Teile | Aktivator Desmorapid^{®} DB (Bayer AG) |
| | |
| 0,21 Gew.-Teile | Aktivator Dabco 33 LV (Air Products) |
| | |
| 1,95 Gew.-Teile | Wasser |
| | |
| 6,0 Gew.-Teile | Baylith^{®} L (Zeolith von UOP) |

### Komponente B:

### Desmodur^{®} 44V10L (Bayer AG)

Polyisocyanatgemisch der Diphenylmethanreihe, hergestellt durch Phosgenierung eines Anilin /Formaldehyd-Kondensats; NCO-Gehalt: 31,5 Gew.-%, Viskosität (bei 25°C): 100 mPa.s.

Die Komponenten A und B wurden im Gewichtsverhältnis 100:137 mittels Rührer zur Umsetzung gebracht und in einer geschlossenen Form auf eine Rohdichte von 250 kg/m³ verdichtet. Die freie Rohdichte des Schaumstoffes betrug 100 kg/m³.

### Beispiel 3 (erfindungsgemäß):

### Rezeptur für PUR-Hartschaumstoff:

### Komponente A:

| | |
|---|---|
| 45,0 Gew.-Teile | Sucrose, Propylenglykol-gestarteter Polyether vom Molekulargewicht 600 g/ml (OH-Zahl: 450) auf Basis 1,2-Propylenoxid |
| | |
| 35,0 Gew.-Teile | Sucrose, Ethylenglykol-gestarteter Polyether vom Molekulargewicht 360 g/mol (OH-Zahl:440) auf Basis 1,2-Propylenoxid |
| | |
| 15,0 Gew.-Teile | Trimethylolpropan-gestarteter Polyether vom Molekulargewicht 160 g/mol (OH-Zahl:1030) auf Basis 1,2-Propylenoxid |
| | |
| 1 Gew.-Teil | Stabilisator B 8411 (Fa. Goldschmidt AG) |
| | |
| 0,6 Gew.-Teile | Aktivator Desmorapid^{®} PV (Bayer AG) |
| | |
| 1,8 Gew.-Teile | Aktivator Desmorapid^{®} DB (Bayer AG) |
| | |
| 0,21 Gew.-Teile | Aktivator Dabco 33 LV (Air Products) |
| | |
| 1,95 Gew.-Teile | Wasser |

### Komponente B:

### Desmodur^{®} 44V10L (Bayer AG)

Polyisocyanatgemisch der Diphenylmethanreihe, hergestellt durch Phosgenierung eines Anilin /Formaldehyd-Kondensats; NCO-Gehalt: 31,5 Gew.-%, Viskosität (bei 25°C): 100 mPa.s sowie 4 Gew.-% Baylith^{®} L (Zeolith von UOP).

Die Komponenten A und B wurden im Gewichtsverhältnis 100:151 mittels Rührer zur Umsetzung gebracht und in einer geschlossenen Form auf eine Rohdichte von 250 kg/m³ verdichtet. Die freie Rohdichte des Schaumstoffes betrug 100 kg/m³.

Bei allen drei Beispielen betrug die freie Rohdichte 100 kg/m³ und die Endrohdichte 250 kg/m³; der Verdichtungsfaktor war 2,5. In der folgenden Tabelle sind die Shore-Härten angegeben, die ein Maßstab für die Ausprägung der Integralstruktur darstellen.

| | Beisp. 1 (Vergl.) | Beisp. 2 (Vergl.) | Beisp. 3 (Erfindung) |
|---|---|---|---|
| Shore D | 33 | 38 | 44 |

Mit dem erfinderischen Verfahren sind Oberflächenhärten zu erzielen, die sonst nur mit physikalischen Treibmitteln zu erzielen sind. Diese sind jedoch entweder verboten (FCKW) oder brennbar (Pentan). Der Einsatz von Zeolithen in der Isocyanatkomponente erhöht die Shore-Härte im Vergleich zum Einsatz in der Polyolformulierung nochmals beträchtlich. Es wurden mit der Rezeptur aus Beispiel 3 und der Rezeptur aus Beispiel 1 Platten mit unterschiedlichen Rohdichten gefertigt:

| | | | | | | |
|---|---|---|---|---|---|---|
| Rohdichte (kg/m³) | 180 | 200 | 225 | 250 | 275 | 350 |
| Shore D (Rezeptur 1) | 24 | 27 | 30 | 33 | 36 | 42 |
| Shore D (Rezeptur 3) | 32 | 35 | 39 | 44 | 48 | 56 |

## Patentansprüche

1. Verfahren zur Herstellung von Polyurethanintegralschaumstoffen mit Rohdichten von 180 - 400 kg/m³ ohne Verwendung von physikalischen Treibmitteln, **dadurch gekennzeichnet, dass** man eine Polyolformulierung (A) bestehend aus
a) mindestens einer Polyolkomponente mit einer OH-Zahl von 20 bis 1050, vorzugsweise 200 bis 900, und einer Funktionalität von 2 bis 6, bevorzugt 2 bis 5, oder einer Mischung aus Polyolkomponenten mit einer rechnerisch gemittelten OH-Zahl von 250 bis 650, bevorzugt 350 bis 500, und einer rechnerisch gemittelten Funktionalität von 2,5 bis 5, bevorzugt 3 bis 4,5,
b) gegebenenfalls Kettenverlängerungs- und/oder Vernetzungsmitteln,
c) gegebenenfalls Aktivatoren,
d) 0,5 - 5 Gew.-%, bezogen auf (A), Wasser als Treibmittel und
e) gegebenenfalls an sich bekannten Zusatzstoffen und Hilfsmitteln mit einer Isocyanatkomponente (B) bestehend aus
f) organischen und/oder modifizierten organischen Polyisocyanaten und/oder Polyisocyanatprepolymeren und
g) 2 - 10 Gew.%, bezogen auf (B) anorganischen Zeolithen
umsetzt.

## Claims

1. Process for producing integral polyurethane foams with envelope densities of from 180 to 400 kg/m³ without use of physical blowing agents, **characterized in that** a polyol formulation (A) composed of
a) at least one polyol component having an OH number of from 20 to 1050, preferably from 200 to 900, and having a functionality of from 2 to 6, preferably from 2 to 5, or a mixture of polyol components with a calculated average OH number of from 250 to 650, preferably from 350 to 500, and with a calculated average functionality of from 2.5 to 5, preferably from 3 to 4.5,
b) if appropriate, chain extenders and/or crosslinking agents,
c) if appropriate, activators,
d) from 0.5 to 5% by weight, based on (A), of water as blowing agent and
e) if appropriate, additives and auxiliaries known per se
is reacted with an isocyanate component (B) composed of
f) organic and/or modified organic polyisocyanates and/or polyisocyanate prepolymers and
g) from 2 to 10% by weight, based on (B) of inorganic zeolites.

## Revendications

1. Procédé pour la préparation de mousses intégrales en polyuréthane présentant des densités brutes de 180-400 kg/m³ sans utiliser d'agents gonflants physiques, **caractérisé en ce qu'**on transforme une formulation polyol (A) constituée par
a) au moins un composant polyol présentant un indice OH de 20 à 1050, de préférence de 200 à 900, et une fonctionnalité de 2 à 6, de préférence de 2 à 5, ou un mélange de composants polyol présentant un indice OH moyen calculé de 250 à 650, de préférence de 350 à 500, et une fonctionnalité moyenne calculée de 2,5 à 5, de préférence de 3 à 4,5,
b) le cas échéant des agents d'allongement de chaîne et/ou des réticulants,
c) le cas échéant des activateurs,
d) 0,5-5% en poids, par rapport à (A), d'eau comme agent gonflant et
e) le cas échéant des additifs et des adjuvants connus en soi
avec un composant isocyanate (B) constitué par
f) des polyisocyanates et/ou des prépolymères de polyisocyanates organiques et/ou organiques modifiés et
g) 2-10% en poids de zéolithes inorganiques par rapport à (B).
